# EUROPÄISCHE PATENTSCHRIFT

(11) **EP 3 388 817 B1**
(45) Veröffentlichungstag und Bekanntmachung des Hinweises auf die Patenterteilung: **13.05.2020**
(21) Anmeldenummer: 18167052.2
(22) Anmeldetag: 12.04.2018
(51) Int. Cl.: G01N 21/49, G01N 21/85, G01N 21/47, G01N 21/03

(54) **RÜCKSTREUSENSOR FÜR FLÜSSIGE, PASTÖSE UND/ODER PULVRIGE MEDIEN UND VERFAHREN ZUM MESSEN DER OPTISCHEN RÜCKSTREUUNG IN FLÜSSIGEN, PASTÖSEN UND/ODER PULVRIGEN MEDIEN**
BACKSCATTER SENSOR FOR LIQUID, PASTY AND/OR POWDERED MEDIA AND METHOD FOR MEASURING OPTICAL BACKSCATTERING IN LIQUID, PASTY AND/OR POWDERY MEDIA
CAPTEUR À RÉTRODIFFUSION POUR MILIEUX LIQUIDES, PÂTEUX ET/OU POUDREUX ET PROCÉDÉ DE MESURE DE LA RÉTRODIFFUSION OPTIQUE DANS DES MILIEUX LIQUIDES, PÂTEUX ET/OU POUDREUX

(30) Priorität: 12.04.2017 DE 102017107963
(43) Veröffentlichungstag der Anmeldung: 17.10.2018
(73) Patentinhaber: Exner & Tottewitz Besitz GBR, 76275 Ettlingen (DE)
(72) Erfinder: CREMERS, Gabriel, 76149 Karlsruhe (DE); TOTTEWITZ, Michael, 76646 Bruchsal (DE); EXNER, Detlef, 71297 Mönsheim (DE)
(74) Vertreter: Lemcke, Brommer & Partner Patentanwälte Partnerschaft mbB

(56) Entgegenhaltungen:
- DE-A1-102010 016 060
- GB-A- 2 283 091
- US-A1- 2002 126 289
- US-A1- 2004 122 280
- US-A1- 2013 077 097
- US-A1- 2015 090 900

## Beschreibung

Die vorliegende Erfindung betrifft einen Rückstreusensor für flüssige, pastöse und/oder pulvrigen Medien gemäß Anspruch 1 sowie ein Verfahren zum Messen der optischen Rückstreuung in in flüssigen, pastösen und/oder pulvrigen Medien gemäß Anspruch 13.

Rückstreusensoren werden zur Überwachung und Steuerung von Produktionsprozessen eingesetzt. Bei Rückstreusensoren wird mittels einer Lichtquelle ein Messstrahl in das zu messende Medium ausgesandt und mittels eines Detektors wird der reflektierte Anteil des Messstrahls detektiert. Bei typischen Anwendungen ist es wünschenswert, den Rückstreusensor über ein Zuführrohr in ein Behältnis oder eine Leitung mit dem zu messenden Medium einzuführen. Hierdurch ergeben sich hohe Anforderungen an eine kompakte Bauform, um den notwendigen Durchmesser des Zuführrohres für den Rückstreusensor gering zu halten. Die Lichtquelle und der Detektor werden durch ein für den Messstrahl transparentes Abschirmelement des Rückstreusensors von dem zu messenden Medium (Messmedium) abgeschirmt, so dass kein Messmedium in den Rückstreusensor eintreten kann.

Aus DE 10 2010 016 060 A1 ist ein Rückstreusensor für Flüssigkeiten mit spezieller Anordnung der optischen Achse der Lichtquelle und des Detektors bekannt, um einerseits eine kompakte Bauform und andererseits eine präzise Messung der Prüfung von Flüssigkeiten auch unter widrigen Rahmenbedingungen zu ermöglichen.

Der vorliegenden Erfindung liegt die Aufgabe zugrunde, den bekannten Rückstreusensor hinsichtlich der Fehleranfälligkeit zu verbessern.

Gelöst ist diese Aufgabe durch einen Rückstreusensor für flüssige, pastöse und/oder pulvrigen Medien gemäß Anspruch 1 und durch ein Verfahren zum Messen der optischen Rückstreuung in flüssigen, pastösen und/oder pulvrigen Medien gemäß Anspruch 13.

Vorteilhafte Ausgestaltungen finden sich in den abhängigen Ansprüchen.

Der erfindungsgemäße Rückstreusensor ist bevorzugt zur Durchführung des erfindungsgemäßen Verfahrens, insbesondere einer vorteilhaften Ausführungsform hiervon, ausgebildet. Das erfindungsgemäße Verfahren ist bevorzugt zur Durchführung mittels des erfindungsgemäßen Rückstreusensors, insbesondere einer bevorzugten Ausführungsform hiervon, ausgebildet.

Der erfindungsgemäße Rückstreusensor weist eine Lichtquelle zum Aussenden eines Messstrahls, einen Detektor zum Detektieren des an dem zu messenden Medium zumindest teilweise reflektierten Messstrahls und ein flüssigkeitsdichtes, optisches Abschirmelement zum Abschirmen der Lichtquelle und des Detektors gegenüber des zu messenden Medium auf. In Benutzungskonfiguration ist somit das Abschirmelement zwischen dem zu messenden Medium einerseits und der Lichtquelle und dem Detektor andererseits angeordnet. Das Abschirmelement ist dazu ausgebildet, von dem von der Lichtquelle erzeugten Messstrahl durchdrungen zu werden, so dass der Messstrahl in das Medium eindringen kann. Ebenso ist das Abschirmelement dazu ausgebildet, dass der von dem Medium reflektierte Anteil des Messstrahls durch das Abschirmelement wieder in den Rückstreusensor eindringen kann und zumindest teilweise mittels des Detektors detektiert wird. Das optische Abschirmelement ist somit bevorzugt transparent zumindest für den Messstrahl ausgebildet.

Wesentlich ist, dass das Abschirmelement als bikonvexe Linse ausgebildet ist, mit zumindest einer ersten, der Lichtquelle und dem Detektor zugewandten konvexen Oberfläche und zumindest einer zweiten, in Messkonfiguration dem zu messenden Medium zugewandten konvexen Oberfläche. Der Rückstreusensor ist für einen direkten Kontakt zwischen zweiter konvexer Oberfläche des Abschirmelementes und dem zu messenden Medium in Messkonfiguration ausgebildet.

Bisher wurde davon ausgegangen, dass ein Rückstreusensor keine in das zu messende Medium hineinragenden Bauteile aufweisen soll um schädliche Einflüsse wie beispielsweise starke Verschmutzung zu vermeiden. Es wurden daher plane Abschirmelemente verwendet.

Die vorliegende Erfindung ist auf die Erkenntnis des Anmelders begründet, dass im Gegensatz zu den bisherigen Annahmen ein Rückstreusensor, welcher aufgrund der zweiten konvexen Oberfläche zumindest teilweise mit dem Abschirmelement in das zu messende Medium hineinragt, erhebliche Vorteile bietet:
Entgegen der bisherigen Annahmen verringert die zweite konvexe Oberfläche das Anhaften von Schmutzpartikeln und anderen optischen störenden Elementen wie beispielsweise Luftblasen. Darüber hinaus ermöglicht die Verwendung einer bikonvexen Linse als Abschirmelement einen kostengünstigen Aufbau, welcher gleichzeitig einen Strahlengang ermöglicht, so dass in einem nahe an der zweiten konvexen Oberfläche des Abschirmelementes in dem Medium liegenden Bereiches reflektierte Strahlung mittels des Detektors detektiert wird. Hierdurch erhöht sich die Messgenauigkeit erheblich gegenüber vorbekannten Rückstreusensoren, deren Messbereich weiter in die Tiefe der zu messenden Flüssigkeit hineinreicht. Mit dem erfindungsgemäßen Rückstreusensor ist somit in einfacher Weise eine Beschränkung auf die Detektion nahe an dem Abschirmelement in dem Medium reflektierter Strahlung möglich.

Die Patentdokumente US20040122280, US20150090900 und US20130077097 offenbaren Rückstreusensoren, wobei ein Abschirmelement als bikonvexe Linse ausgebildet ist.

Vorteilhafterweise weist der Rückstreusensor eine Fassung für das Abschirmelement auf, welche derart ausgebildet und in welcher das Abschirmelement derart angeordnet ist, dass in Messkonfiguration die zweite konvexe Oberfläche zumindest teilweise über die Fassung hinaus in das zu messende Medium hineinragt. Hierdurch werden in konstruktiv einfacher Weise die zuvor genannten Vorteile erzielt.

Insbesondere ist es vorteilhaft, dass die Fassung eine Kontaktfläche, bevorzugt eine ebene Kontaktfläche für die zu messende Flüssigkeit aufweist und das Abschirmelement ohne Rücksprung an der Kontaktfläche in der Fassung angeordnet ist. Hierdurch werden weitere Fehlerquellen ausgeschlossen oder zumindest erheblich verringert, da eine Ablagerung von Partikeln oder das sich Ausbilden von Luftblasen zwischen Abschirmelement und Fassung ganz oder zumindest erheblich vermieden wird.

Vorteilhafterweise verläuft der Messstrahl zwischen Lichtquelle und Abschirmelement als optischer Freistrahl. Hierdurch ist eine konstruktiv einfache und kostengünstige Ausgestaltung gegeben, da keine zusätzlichen optischen Elemente, insbesondere keine weiteren Linsen notwendig sind. Insbesondere ist es vorteilhaft, dass der Messstrahl ohne Zwischenschaltung weiterer optischer Elemente zwischen Lichtquelle und Abschirmelement verläuft.

Alternativ oder zusätzlich ist es vorteilhaft, dass der an dem Medium reflektierte Messstrahl zwischen Abschirmelement und Detektor als optischer Freistrahl verläuft, insbesondere bevorzugt ohne Zwischenschaltung weiterer optischer Elemente zwischen Abschirmelement und Detektor. Auch hierdurch wird eine kostengünstige und konstruktiv einfache Bauweise erzielt.

Lichtquelle und Detektor weisen jeweils vorteilhafterweise einen Abstand kleiner 5 cm, insbesondere kleiner 1 cm, weiter bevorzugt kleiner 0,5 cm zu der ersten konvexen Oberfläche des Abschirmelementes auf. Hierdurch wird eine kompakte Bauform gewährleistet.

Eine besonders konstruktiv einfache und robuste Ausgestaltung wird in einer vorteilhaften Ausführungsform erzielt, wobei das Abschirmelement einstückig aus für den Messstrahl transparentem Material ausgebildet ist. Hierdurch wird darüber hinaus eine Dejustierung zwischen erster und zweiter konvexen Oberfläche des Abschirmelementes vermieden. Insbesondere ist es vorteilhaft, das Abschirmelement als Kugellinse oder Stablinse auszubilden.

Das bevorzugt einstückig ausgebildete Abschirmelement ist insbesondere bevorzugt homogen oder zumindest im Wesentlichen homogen aus einem Material ausgebildet. Insbesondere ist das Abschirmelement bevorzugt einstückig als optisches Element aus einem transparenten Material, insbesondere Glas, Mineral, bevorzugt Saphir oder Kunststoff ausgebildet. Ebenso liegt es im Rahmen der Erfindung, dass das Abschirmelement einstückig aus mehreren Ausgangselementen mittels Stoffschluss ausgebildet wird. Hierbei ist es jedoch vorteilhaft, dass die Ausgangselemente und ein etwaiges zum Stoffschluss verwendetes Material wie beispielsweise ein Klebstoff, gleiche oder zumindest ähnliche optische Eigenschaften im Wellenlängenbereich des Messstrahls, insbesondere bevorzugt einen gleichen oder ähnlichen optischen Brechungsindex aufweisen, um Brechungen und Reflektionen an den Übergangsbereichen zwischen den Ausgangselementen zu vermeiden.

Das Abschirmelement ist insbesondere bevorzugt als Kugellinse oder Stablinse ausgebildet, wie zuvor beschrieben. Hierdurch ergibt sich ein robuster und kostengünstiger Aufbau, bei welchem insbesondere Fokussierung des Messstrahls, Bilden des gestreuten Messstrahls auf den Detektor und Abschirmen gegenüber dem zu messenden Material mittels der Kugellinse oder Stablinse gewährleistet werden kann. Insbesondere die Verwendung einer Kugellinse ist kostengünstig. Darüber hinaus ist aufgrund der Kugelsymmetrie ein geringerer Justierungsaufwand bei Verwendung einer Kugellinse verglichen mit einer Stablinse notwendig.

Vorzugsweise weisen erste und zweite konvexe Oberfläche den gleichen Krümmungsradius auf. Hierdurch ist die Verwendung kostengünstiger optischer Elemente als Abschirmelement möglich.

Insbesondere bei Ausbildung des Abschirmelementes als Stablinse ist es vorteilhaft, dass erste und zweite konvexe Oberfläche den gleichen Radius aufweisen. Ebenso liegt es im Rahmen der Erfindung, dass erste und zweite konvexe Fläche unterschiedliche Radien aufweisen, hierbei weist bevorzugt die erste konvexe Fläche einen größeren Radius verglichen mit der zweiten konvexen Fläche auf, um in einfacher Weise ein Fokussieren des Messstrahls in Messkonfiguration im Medium zu erzielen.

Bei Ausbilden des Abschirmelementes als Stablinse mit erster und zweiter konvexer Oberfläche, die denselben Krümmungsradius aufweisen, ist die Stablinse bevorzugt derart ausgebildet, dass erste und zweite konvexe Oberfläche auf einer gemeinsamen Kugeloberfläche liegen. In dieser vorteilhaften Ausführungsform stellt die Stablinse somit einen Teilkörper einer Kugellinse dar. Bei Ausbildung der Stablinse mit unterschiedlichen Radien von erster und zweiter konvexer Oberfläche weist die Stablinse bevorzugt eine Höhe auf, welche größer als der doppelte Radius der stärker gekrümmten Oberfläche, bevorzugt gleich oder größer des doppelten Radius der schwächer gekrümmten Oberfläche ist. Hierdurch wird eine unaufwändige Fokussierung in Messkonfiguration innerhalb des Mediums ermöglicht.

Vorteilhafterweise werden Lichtquelle und Detektor mit parallelen optischen Achsen angeordnet. Hier zeigt sich ein weiterer Vorteil der Verwendung eines Abschirmelementes mit einer ersten und einer zweiten konvexen Oberfläche: Zur Erzielung einer hohen Messgenauigkeit ist es im Gegensatz zu vorbekannten Rückstreusensoren nicht notwendig, die optischen Achsen von Lichtquelle und Detektor in einem bestimmten schrägen Winkel anzuordnen. Vielmehr können in vorteilhafter Weise die optischen Achsen von Lichtquelle und Detektor parallel verlaufen, wodurch eine weitere Reduzierung des notwendigen Bauraums und insbesondere eine einfachere Herstellung des Rückstreusensors und insbesondere elektrische Kontaktierung von Lichtquelle und Detektor möglich ist.

Um direkte Rückstreuung zu vermeiden ist es vorteilhaft, dass Lichtquelle und Detektor derart angeordnet sind, dass die optischen Achsen von Lichtquelle und Detektor jeweils nicht senkrecht zu der ersten konvexen Oberfläche stehen. Dies ist in einer insbesondere vorteilhaften Ausführungsform gewährleistet, in welcher die optischen Achsen von Lichtquelle und Detektor parallel zu einer Zylinderachse eines Einschubrohres, in welches der Rückstreusensor bei Verwendung eingeschoben wird, stehen und abseits der Mittelachse des als bikonvexe Linse ausgebildeten Abschirmelementes angeordnet sind. Hierdurch ist gewährleistet, dass sowohl die optische Achse der Lichtquelle als auch des Detektors nicht senkrecht zu der ersten konvexen Oberfläche stehen.

Um zusätzlich Messfehler zu vermeiden ist es vorteilhaft, dass der Detektor außerhalb des Strahlengangs eines innerhalb des Abschirmelementes an der Innenseite der zweiten konvexen Oberfläche zumindest teilweise reflektierten Messstrahls angeordnet ist. Bei typischen Konfigurationen kann nicht vermieden werden, dass der von der Lichtquelle erzeugte Messstrahl nicht vollständig aus dem Abschirmelement in das Medium eintritt, sondern teilweise an der Innenseite (dem Medium abgewandten Seite) der zweiten konvexen Oberfläche reflektiert wird.

Vorteilhafterweise ist daher der Detektor nicht im Strahlengang eines solchen an der Innenseite der zweiten konvexen Oberfläche reflektierten Messstrahls angeordnet, um Messfehler zu vermeiden.

Erfindungsgemäß ist der Detektor außerhalb einer Messstrahl-Reflektionsebene angeordnet, welche durch den Strahlengang des Messstrahls innerhalb des Abschirmungselementes und im Strahlengang des an der Innenseite der zweiten konvexen Oberfläche teilweise reflektierten Messstrahls innerhalb des Abschirmungselementes definiert wird. Hierdurch wird wie zuvor beschrieben eine Rückstreuung innerhalb des Abschirmelementes zu dem Detektor und somit ein Messfehler vermieden oder zumindest erheblich verringert.

Die Messstrahl-Reflektionsebene ist somit bevorzugt durch den Strahlverlauf, insbesondere die optischen Achsen des Strahlverlaufs desjenigen Anteils des Messstrahls innerhalb des Abschirmungselemente definiert, welcher an der Innenseite der zweiten konvexen Oberfläche reflektiert wird. Der Strahlverlauf diese Anteils des Messstrahls (bzw. die zugeordneten optische Achsen) liegen somit in der Messstrahl-Reflektionsebene.

Die Lichtquelle ist bevorzugt zum Aussenden des Messstrahls entlang einer optischen Achse der Lichtquelle ausgebildet. Vorteilhafterweise ist der Detektor außerhalb einer Messstrahl-Fokusebene angeordnet, welche durch die optische Achse der Lichtquelle und den Fokuspunkt, an welchem der Messstrahl fokussiert wird, insbesondere durch das Abschirmelement im Medium fokussiert wird, definiert wird. Der Messstrahl wird zur Definition eines Messorts bevorzugt in einem Bereich fokussiert, welcher in Messkonfiguration im zu messenden Medium liegt, bevorzugt im Bereich der dem zu messenden Medium zugewandten konvexen zweiten Oberfläche.

Die optische Achse der Lichtquelle und der Fokuspunkt definieren somit eine Ebene, wobei im Abschirmelement an der zweiten konvexen Oberfläche reflektierte Teilstrahlen des Messstrahls typischerweise einen Strahlengang innerhalb dieser Ebene aufweisen. Es ist daher wünschenswert, ein Beaufschlagen des Detektors durch diese Streustrahlung innerhalb der Messstrahl-Fokusebene zu vermeiden.

Vorteilhafterweise ist der Detektor daher derart angeordnet, dass kein oder nur ein geringer Anteil von Strahlengängen innerhalb der Messstrahl-Fokusebene in einen Detektionsbereich des Detektors gelangen. Insbesondere ist es vorteilhaft, dass der Detektor außerhalb der Messstrahl-Fokusebene angeordnet ist. Alternativ oder zusätzlich ist es vorteilhaft, dass der Detektor derart angeordnet ist, dass eine optische Achse des Detektors nicht innerhalb der Messstrahl-Fokusebene angeordnet ist. In dieser vorzugsweisen Ausführungsform kann der Detektor somit derart angeordnet sein, dass die optische Achse des Detektors die Fokusebene lediglich schneidet. Bevorzugt ist der Detektor derart angeordnet, dass die optische Achse des Detektors parallel und beabstandet zu der Messstrahl-Fokusebene liegt.

Die optische Achse des Detektors ist bevorzugt diejenige Achse, deren Strahlengänge die höchste Signalintensität bei Auftreffen auf den Detektor erzeugen. Der Rückstreusensor ist bevorzugt zur Einbettung in ein zylindrisches Einschubelement ausgebildet, wobei Lichtquelle und Detektor mit optischen Achsen parallel zu einer Zylinderachse des Einschubelementes angeordnet sind. Hierdurch ergibt sich - wie zuvor bereits beschrieben - eine besonders kompakte Bauform und einfache und robuste Konstruktion, da die Anordnung von Lichtquelle und Detektor mit optischen Achsen parallel zur Zylinderachse des Einschubelementes verfahrenstechnisch weniger aufwändig erzielt werden kann, als die Anordnung von Lichtquelle und Rückstreusensor in vorgegebenen schräg zueinanderstehenden Ebenen.

Vorteilhafterweise ist der Rückstreusensor mit einem Fokuspunkt für den Messstrahl in einem Abstand zwischen 0 mm und 1 cm, bevorzugt zwischen 0,1 mm und 0,8 mm zu der zweiten konvexen Fläche in dem zu messenden Medium ausgebildet. Hierdurch ergibt sich der Vorteil, dass die Stecke, welche der Messstrahl im Medium zurücklegt, gering ist und somit eine geringe Absorption des Messstrahls im Medium stattfindet.

Vorteilhafterweise weisen die erste konvexe Fläche und die zweite konvexe Fläche einen gleichen Krümmungsradius auf. Hierdurch ergibt sich der Vorteil, dass optische Bauelemente aus üblichen Standardsortiments verwendet werden können und keine Sonderanfertigungen notwendig sind.

Vorteilhafterweise liegen der Krümmungsradius der ersten konvexen Fläche und der Krümmungsradius der zweiten konvexen Flächen im Bereich 4 mm und 2 cm, bevorzugt im Bereich 5 mm bis 15 mm, insbesondere 6 mm bis 12 mm. Hierdurch ergibt sich der Vorteil einerseits einer kompakten Bauform und andererseits der Möglichkeit der Verwendung von Standardkomponenten für Lichtquelle und Detektor.

Bevorzugt sind erste und zweite Konvexe Fläche derart ausgebildet und angeordnet, dass die optische Achse der ersten konvexen Fläche und zweiten konvexen Fläche gleich sind.

Das erfindungsgemäße Verfahren zum Messen der optischen Rückstreuung in einem Medium umfasst einen Verfahrensschritt A, wobei ein Messstrahl mittels einer Lichtquelle erzeugt wird und der Messstrahl durch ein Abschirmelement in ein zu messendes Medium geleitet wird. In einem Verfahrensschritt B erfolgt eine Detektion eines aus dem Medium durch das Abschirmelement zu einem Detektor rückgestreuten Anteil des Messstrahls.

Wesentlich ist, dass Messstrahl und rückgestreuter Anteil des Messstrahls mittels einer ersten, der Lichtquelle und dem Detektor zugewandten konvexen Oberfläche des Abschirmelementes und einer zweiten, dem Medium zugewandten konvexen Oberfläche des Abschirmelementes fokussiert werden. Hierdurch ergeben sich insbesondere die eingangs zu der erfindungsgemäßen Vorrichtung erwähnten Vorteile.

Diese eingangs zu der erfindungsgemäßen Vorrichtung erwähnten Vorteile werden somit durch die Verwendung eines optischen Elementes mit zumindest einer ersten und einer zweiten konvexen Oberfläche als Abschirmelement für einen optischen Rückstreusensor erzielt.

Die Lichtquelle kann als Glühbirne mit vorgeschalteter Fokussierlinse ausgebildet sein. Besonders vorteilhaft ist es jedoch, die Lichtquelle als Leuchtdiode (LED) auszubilden. Hierdurch ist ein robuster, gegen Erschütterungen unanfälliger Aufbau gewährleistet und darüber hinaus kann in einfacher Weise eine gewünschte Wellenlänge des Messstrahls realisiert werden. Der Detektor kann in an sich bekannter Weise ausgebildet sein. Insbesondere kann der Detektor als Photodiode ausgebildet sein.

Die erfindungsgemäße Vorrichtung und das erfindungsgemäße Verfahren sind insbesondere zur Trübungsmessung von Flüssigkeiten, pastösen und/oder pulvrigen Medien geeignet, insbesondere auch von Medien, welche Mischformen mit flüssigen, pastösen und/oder pulverförmigen Bestandteilen sind. Bei pulverförmigen Medien kann insbesondere eine Restfeuchte anhand der Rückstreuung ermittelt werden.

Weitere vorteilhafte Merkmale und bevorzugte Ausführungsformen der Erfindung werden im Folgenden anhand der Figuren und von Ausführungsbeispielen erläutert. Dabei zeigt:
Figur 1 ein erstes Ausführungsbeispiel eines erfindungsgemäßen Rückstreusensors in Seitenansicht;
Figur 2 eine Draufsicht von oben auf den Rückstreusensor;
Figur 3 einen Schnitt durch den Rückstreusensor gemäß Ebene L in Figur 2;
Figur 4 einen Schnitt durch den Rückstreusensor gemäß Ebene D in Figur 2 und
Figur 5 eine Ausschnittvergrößerung des Detektionsbereiches des Rückstreusensors.

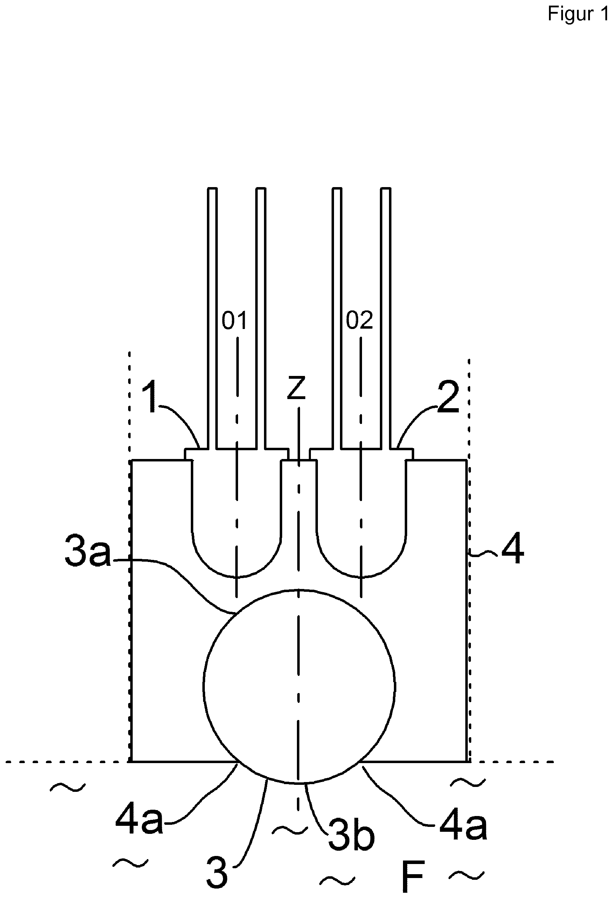

Gleiche Bezugszeichen in den Figuren 1 bis 5 bezeichnen gleiche oder gleichwirkende Elemente.

In Figur 1 ist ein Ausführungsbeispiel eines erfindungsgemäßen Rückstreusensors in Seitenansicht dargestellt. Der Rückstreusensor weist eine als LED ausgebildete Lichtquelle 1 auf, welche zum Aussenden eines Messstrahls mit einer Wellenlänge zwischen 800nm und 880nm, vorliegend 850 nm ausgebildet ist. Weiterhin weist der Rückstreusensor einen als Photodiode ausgebildeten Detektor 2 auf, welcher zur Detektion von Licht der Wellenlänge des Messstrahls, welcher von der Lichtquelle 1 erzeugt wird, ausgebildet ist. Der als Ausführungsbeispiel beschriebene Rückstreusensor ist zum Messen der Rückstreuung aus unterschiedlichen Medien geeignet, insbesondere flüssige, pastöse und pulverförmige Medien oder Mischformen hiervon. Vorliegend wird die Verwendung zur Trübungsmessung einer Flüssigkeit F als Medium beschrieben.

Der Rückstreusensor weist weiterhin ein als Kugellinse und somit als bikonvexe Linse ausgebildetes Abschirmelement 3 auf. Die Kugellinse hat einen Radius von 5 mm. Das Abschirmelement 3 weist somit eine erste, der Lichtquelle und dem Detektor zugewandte konvexe Oberfläche 3a und eine zweite, in Messkonfiguration dem zu messenden Medium zugewandten konvexe Oberfläche 3b auf. In Messkonfiguration ist die zweite konvexe Oberfläche 3b des Abschirmelementes 3 dem zu messenden Medium F zugewandt und steht direkt mit dieser in Verbindung.

Wie in Figur 1 ersichtlich, ist hierdurch eine sehr raumsparende Anordnung möglich. Gleichzeitig verhindert die zweite konvexe Oberfläche 3b, welche in das Medium F hineinragt, in besonders effektiver Weise ein Anlagern von Schmutz und/oder Luftblasen.

Der Rückstreusensor weist eine Fassung 4 für das Abschirmelement auf, welche als Gehäuse ausgebildet ist. Die Fassung 4 weist eine zylindrische Form auf, wobei an der unteren Seite eine Aussparung vorgesehen ist, durch welche sich die zweite konvexe Oberfläche 3b des Abschirmelementes 3 in das Medium F hineinerstreckt. Das Abschirmelement 3 ist flüssigkeitsdicht an der Fassung 4 angeordnet, so dass keine Flüssigkeit in die Fassung 4 eintreten kann und somit insbesondere Lichtquelle 1 und Detektor 2 durch das Abschirmelement vor dem Medium F geschützt sind.

Die Fassung 4 ist dabei derart ausgebildet, dass am Rand 4a, an welchem das Abschirmelement 3 mit der Fassung 4 in Kontakt steht, kein Rücksprung ausgebildet ist. Hierdurch wird eine Anlagerung von Schmutz und/oder Luftblasen vermieden.

Lichtquelle 1 und Detektor 2 sind jeweils in weiteren Öffnungen des Abschirmelementes 4 angeordnet, derart, dass die optische Achse O1 der Lichtquelle und O2 des Detektors parallel zueinanderstehen. Hierdurch ist eine einfache Fertigung und ein kompakter Aufbau gewährleistet. Wie in Figur 1 durch gestrichelte Linien angedeutet, ist der Rückstreusensor zur Anordnung in einer zylindrischen Ausnehmung, insbesondere in einem Rohr ausgebildet und schließt an der dem Medium F zugewandten Seite bündig in einer planen Ebene mit Fassung 4 und dem des Mediums F zugewandten Rohrende ab. Lediglich die zweite konvexe Oberfläche 3b ragt in das Medium F hinein. Die Zylinderachse dieses Rohres ist somit identisch mit der Zylinderachse Z der zylindrischen Fassung 4. Das Abschirmelement 3 ist mittig zur Achse Z des Abschirmelementes 3 angeordnet. Achse Z sowie die optischen Achsen O1 und O2 sind parallel.

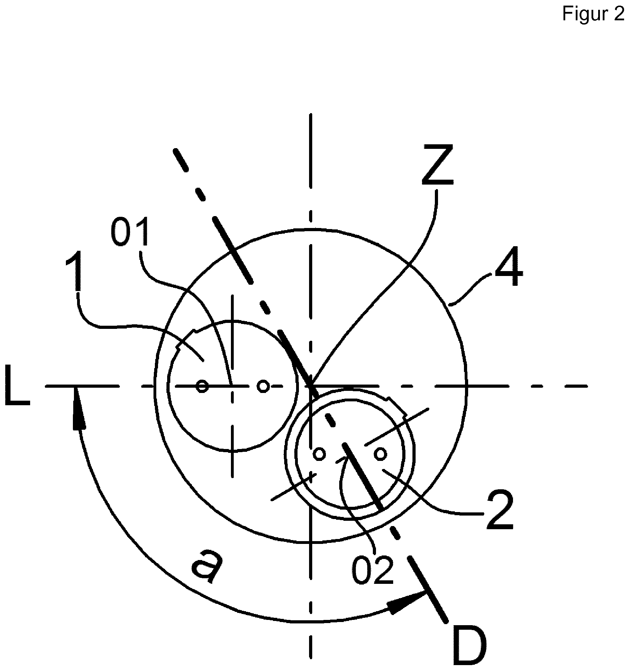

In Figur 2 ist eine Draufsicht von oben auf den Rückstreusensor dargestellt. Hierbei ist ersichtlich, dass die optische Achse O1 mit der Zylinderachse Z eine Ebene L definiert, wobei alle diese geometrischen Elemente senkrecht zur Zeichenebene in Figur 2 stehen. Ebenso definiert die Zylinderachse Z mit der optischen Achse O2 des Detektors eine Ebene D, wobei diese Elemente ebenfalls senkrecht zur Zeichenebene in Figur 2 stehen.

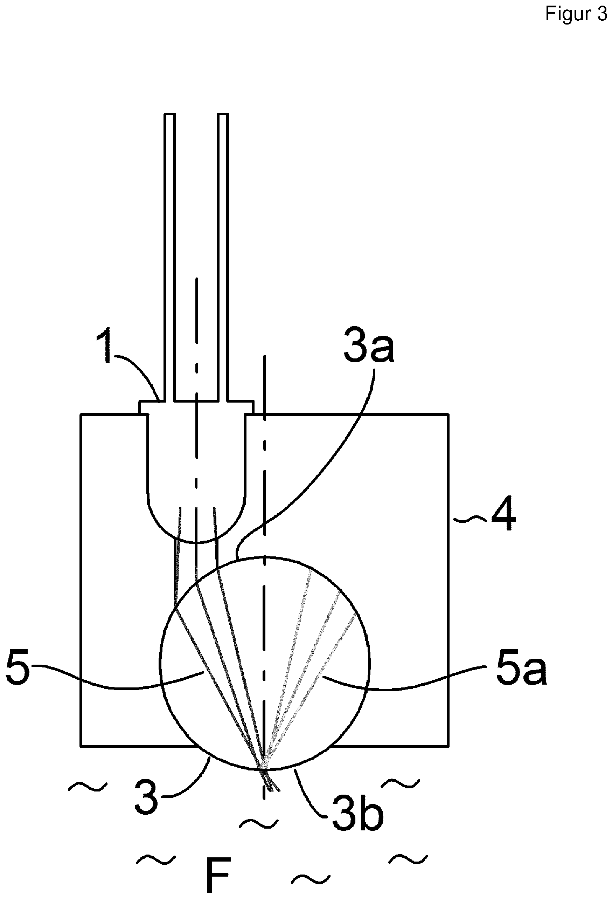

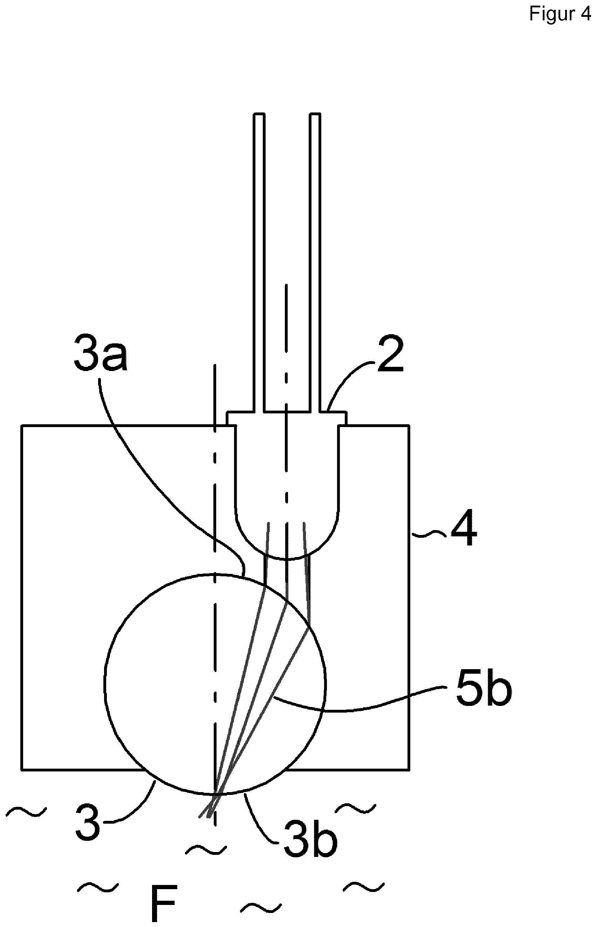

Wie in Figur 2 ersichtlich, schneiden sich die Ebene L und die Ebene D in der Zylinderachse Z. Die optische Achse O2 liegt jedoch nicht in der Ebene L und entsprechend liegt die optische Achse O1 nicht in der Ebene D. Hierdurch wird eine Reflektion eines an der Innenseite der zweiten konvexen Oberfläche reflektierten Messstrahls zu dem Detektor 2 vermieden, wie nachfolgend anhand der Figuren 3 und 4 erläutert wird:
Figur 3 zeigt einen Schnitt gemäß Ebene L in Figur 2. Hierbei ist der von der Lichtquelle 1 ausgesandte Messstrahl 5 gezeigt, welcher an der Innenseite der zweiten konvexen Oberfläche 3b teilweise reflektiert wird. Dieser reflektierte Strahl 5a trifft jedoch nicht auf den Detektor 2, da dieser nicht in der Ebene L angeordnet ist. Wie in Figur 4 ersichtlich, wird lediglich ein in dem Medium F reflektierter Anteil 5b des Messstrahls 5 derart zu dem Abschirmelement 3 reflektiert, dass er mittels des Abschirmelementes 3 auf den Detektor 2 abgebildet wird. Der Detektor 2 liegt somit außerhalb einer Messtrahl-Reflektionsebene, die der Zeichenebene in Figur 2 entspricht und durch den Strahlengang des Messtrahls 5 innerhalb des Abschirmungselementes 3 und den den Strahlengang des an der Innenseite der zweiten konvexen Oberfläche teilweise reflekierten Messtrahls definiert wird.

In Figur 3 ist weiterhin ersichtlich, dass der Detektor 2 außerhalb einer Messstrahl-Fokusebene angeordnet ist, welche durch die optische Achse der Lichtquelle 1 und den Fokuspunkt, an welchem der Messstrahl durch das Abschirmelement im Medium fokussiert wird, definiert wird. Wie in Figur 3 ersichtlich, wird der Messstrahl der Lichtquelle 1 im Medium F fokussiert, im Bereich der dem Medium zugewandten zweiten konvexen Oberfläche des Abschirmelements 3. Die optische Achse der Lichtquelle 1 ist in Figur 3 als gestrichelte Linie, welche die Lichtquelle 1 durchdringt, dargestellt. Diese optische Achse und der Fokuspunkt definieren somit eine Ebene, welche der Zeichenebene in Figur 3 und der Ebene L, welche in Figur 2 senkrecht zur Zeichenebene steht, entspricht.

Der Detektor 2 weist ebenfalls eine optische Achse auf, welche in Figur 4 ebenfalls durch eine gestrichelte Linie, welche den Detektor 2 durchdringt, dargestellt ist. Entsprechend stehen sowohl optische Achse der Lichtquelle 1, als auch des Detektors 2 bei der Ansicht gemäß Figur 2 senkrecht zur Zeichenebene und sind jeweils im Mittelpunkt der in etwa kreisförmigen Elemente Detektor und Lichtquelle angeordnet.

Der Detektor 2 ist somit sowohl derart angeordnet, dass die optische Achse des Detektors 2 nicht innerhalb der Messstrahl-Fokusebene L liegt. In diesem Ausführungsbeispiel ist die optische Achse des Detektors 2 parallel und beabstandet zu der Messstrahl-Fokusebene L. Ebenso ist der Detektor außerhalb der Messstrahl-Fokusebene L angeordnet. Hierdurch wird in effizienter Weise ein Einkoppeln von Streustrahlung, welche an der dem Medium abgewandten Innenseite der zweiten konvexen Oberfläche durch Reflexion des Messstrahls entsteht, vermieden oder zumindest erheblich verringert.

Wie in Figur 1 ersichtlich, sind abgesehen von dem Abschirmelement 3 keine weiteren optischen Elemente vorgesehen, so dass der Messstrahl 5 zwischen Lichtquelle 1 und Abschirmelement 3 als optischer Freistrahl verläuft. Ebenso verläuft der reflektierte Messstrahl zwischen Abschirmelement 3 und Detektor 2 als Freistrahl.

Wie weiterhin in Figur 1 ersichtlich, sind Lichtquelle 1 und Detektor 2 derart angeordnet, dass die optischen Achsen O1 und O2 nicht senkrecht auf der ersten konvexen Oberfläche 3a stehen.

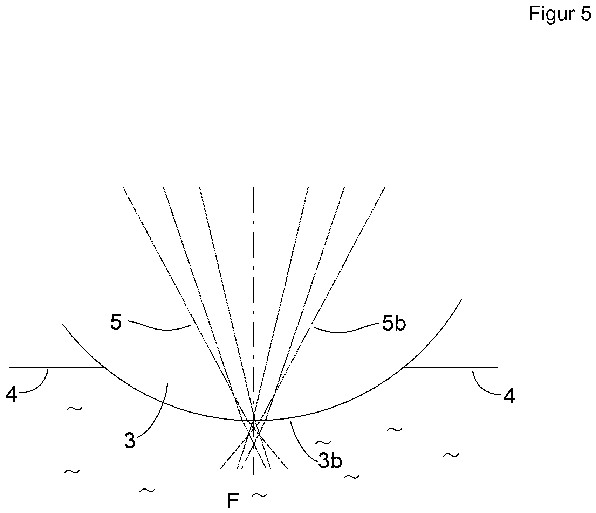

Figur 5 zeigt einen Teilausschnitt aus Figur 1 mit der zweiten konvexen Oberfläche 3b, welche in das Medium F hineinragt. Gezeigt ist der Strahlenverlauf des Messstrahls 5, welcher als in einem oberflächennahen Bereich des Abschirmelementes 3 in dem Medium F teilweise reflektierter Strahl 5b wieder in das Abschirmelement 3 eintritt und zu dem Detektor 2 geleitet wird.

## Patentansprüche

1. Rückstreusensor für flüssige, pastöse und/oder pulvrigen Medien,
mit einer Lichtquelle (1) zum Aussenden eines Messstrahls,
einem Detektor (2) zum Detektieren des an dem zu messenden Medium zumindest teilweise reflektierten Messstrahls und
einem flüssigkeitsdichten optischen Abschirmelement (3) zum Abschirmen der Lichtquelle (1) und des Detektors gegenüber des zu messenden Mediums, wobei
das Abschirmelement (3) als bikonvexe Linse ausgebildet ist, mit zumindest einer ersten, der Lichtquelle (1) und dem Detektor (2) zugewandten konvexen Oberfläche und zumindest einer zweiten, in Messkonfiguration des zu messenden Mediums zugewandten konvexen Oberfläche,
wobei der Rückstreusensor für einen direkten Kontakt zwischen zweiter konvexer Oberfläche und dem zu messenden Mediums in Messkonfiguration ausgebildet ist,
**dadurch gekennzeichnet,**
**dass** der Detektor (2) außerhalb einer Messstrahl-Reflektionsebene angeordnet ist, welche durch den Strahlengang des Messstrahls innerhalb des Abschirmungselementes und den Strahlengang des an der Innenseite der zweiten konvexen Oberfläche teilweise reflektierten Messstrahls innerhalb des Abschirmungselementes definiert wird.

2. Rückstreusensor nach einem der vorangegangenen Ansprüche,
**dadurch gekennzeichnet,**
**dass** der Detektor (2) außerhalb einer Messstrahl-Fokusebene angeordnet ist, welche durch die optische Achse der Lichtquelle und den Fokuspunkt, an welchem der Messstrahl fokussiert wird, insbesondere durch das Abschirmelement im Medium fokussiert wird, definiert wird.

3. Rückstreusensor nach einem der vorangegangenen Ansprüche,
**dadurch gekennzeichnet,**
**dass** der Detektor (2) außerhalb des Strahlengangs eines innerhalb des Abschirmelementes an der Innenseite der zweiten konvexen Oberfläche teilweise reflektierten Messstrahls angeordnet ist.

4. Rückstreusensor nach einem der vorangegangenen Ansprüche,
**dadurch gekennzeichnet,**
**dass** der Rückstreusensor eine Fassung (4) für das Abschirmelement (3) aufweist, welche derart ausgebildet und in welcher das Abschirmelement (3) derart angeordnet ist, dass in Messkonfiguration die zweite konvexe Oberfläche zumindest teilweise über die Fassung (4) hinaus in das zu messende Medium hineinragt.

5. Rückstreusensor nach Anspruch 4,
**dadurch gekennzeichnet,**
**dass** die Fassung (4) eine Kontaktfläche, bevorzugt eine ebene Kontaktfläche für das zu messende Medium aufweist und das Abschirmelement (3) ohne Rücksprung an der Kontaktfläche in der Fassung (4) angeordnet ist.

6. Rückstreusensor nach einem der vorangegangenen Ansprüche,
**dadurch gekennzeichnet,**
**dass** der Messstrahl (5) zwischen Lichtquelle (1) und Abschirmelement (3) als optischer Freistrahl verläuft, bevorzugt ohne Zwischenschaltung weiterer optischer Elemente und/oder der zumindest teilweise an dem zu messenden Medium reflektierte Messstrahl (5) zwischen Abschirmelement (3) und Detektor (2) als optischer Freistrahl verläuft, bevorzugt ohne Zwischenschaltung weiterer optischer Elemente.

7. Rückstreusensor nach einem der vorangegangenen Ansprüche,
**dadurch gekennzeichnet,**
**dass** Lichtquelle (1) und Detektor (2) jeweils einen Abstand kleiner 5 cm, insbesondere kleiner 1 cm, weiter bevorzugt kleiner 0,5 cm zu der ersten konvexen Oberfläche des Abschirmelementes aufweisen.

8. Rückstreusensor nach einem der vorangegangenen Ansprüche,
**dadurch gekennzeichnet,**
**dass** das Abschirmelement (3) einstückig aus für den Messstrahl (5) transparentem Material ausgebildet ist, bevorzugt als Kugellinse oder Stablinse.

9. Rückstreusensor nach einem der vorangegangenen Ansprüche,
**dadurch gekennzeichnet,**
**dass** Lichtquelle (1) und Detektor (2) mit parallelen optischen Achsen angeordnet sind.

10. Rückstreusensor nach einem der vorangegangenen Ansprüche,
**dadurch gekennzeichnet,**
**dass** Lichtquelle (1) und Detektor (2) derart angeordnet sind, dass die optischen Achsen jeweils nicht senkrecht zu der ersten konvexen Oberfläche stehen.

11. Rückstreusensor nach einem der vorangegangenen Ansprüche,
**dadurch gekennzeichnet,**
**dass** der Rückstreusensor zur Einbettung in ein zylindrisches Einschubelement ausgebildet ist und dass Lichtquelle (1) und Detektor (2) mit optischen Achsen parallel zu einer Zylinderachse des Einschubelementes angeordnet sind.

12. Rückstreusensor nach einem der vorangegangenen Ansprüche,
**dadurch gekennzeichnet,**
**dass** der Rückstreusensor mit einem Fokuspunkt für den Messstrahl (5) in einem Abstand zwischen 0 mm und 1 cm, bevorzugt zwischen 0,1 mm und 0,8 mm zu der zweiten konvexen Fläche in dem zu messenden Medium ausgebildet ist.

13. Verfahren zum Messen der optischen Rückstreuung in flüssigen, pastösen
und/oder pulvrigen Medien,
folgende Verfahrensschritte umfassend:
a. Erzeugen eines Messstrahls mittels einer Lichtquelle (1) und Leiten
des Messstrahls durch ein flüssigkeitsdichtes optisches Abschirmelement (3) in ein zu messendes Medium;
b. Detektion eines aus dem Medium durch das Abschirmelement (3) zu einem Detektor (2) rückgestreuten Anteils des Messstrahls; wobei das Abschirmelement (3) zum Abschirmen der Lichtquelle (1) und des Detektors (2) gegenüber dem zu messenden Medium eingesetzt wird und als bikonvexe Linse ausgebildet ist; wobei Messstrahl und rückgestreuter Anteil des Messstrahls mittels einer ersten, der Lichtquelle (1) und dem Detektor (2) zugewandten konvexen Oberfläche des Abschirmelementes und einer zweiten, dem Medium zugewandten konvexen Oberfläche des Abschirmelementes fokussiert werden,
**dadurch gekennzeichnet,**
**dass** der Detektor (2) außerhalb einer Messstrahl-Reflektionsebene angeordnet wird, welche durch den Strahlengang des Messstrahls innerhalb des Abschirmungselementes und den Strahlengang des an der Innenseite der zweiten konvexen Oberfläche teilweise reflektierten Messstrahls innerhalb des Abschirmungselementes definiert wird.

## Claims

1. Backscatter sensor for liquid, pasty and/or pulverulent media,
having a light source (1) for emitting a measuring beam,
a detector (2) for detecting the measuring beam at least partly reflected on the medium being measured, and
a liquid-tight optical shielding element (3) for shielding the light source (1) and the detector with respect to the medium being measured, wherein
the shielding element (3) is in the form of a biconvex lens, having at least one first convex surface which faces towards the light source (1) and the detector (2), and at least one second convex surface which in measuring configuration faces towards the medium being measured, wherein the backscatter sensor is in measuring configuration configured for direct contact between the second convex surface and the medium being measured,
**characterised in that**
the detector (2) is arranged outside a measuring beam reflection plane which is defined by the beam path of the measuring beam inside the shielding element and by the beam path of the measuring beam partly reflected on the inner side of the second convex surface inside the shielding element.

2. Backscatter sensor according to any one of the preceding claims,
**characterised in that**
the detector (2) is arranged outside a measuring beam focus plane which is defined by the optical axis of the light source and by the focus point on which the measuring beam is focussed, especially focussed by the shielding element in the medium.

3. Backscatter sensor according to either one of the preceding claims,
**characterised in that**
the detector (2) is arranged outside the beam path of a measuring beam partly reflected on the inner side of the second convex surface inside the shielding element.

4. Backscatter sensor according to any one of the preceding claims,
**characterised in that**
the backscatter sensor has a mount (4) for the shielding element (3), which mount is constructed in such a way and in which the shielding element (3) is arranged in such a way that in measuring configuration the second convex surface at least to some extent projects beyond the mount (4) into the medium being measured.

5. Backscatter sensor according to claim 4,
**characterised in that**
the mount (4) has a contact face, preferably a planar contact face, for the medium being measured, and the shielding element (3) is arranged in the mount (4) without a recess at the contact face.

6. Backscatter sensor according to any one of the preceding claims,
**characterised in that**
the measuring beam (5) runs between the light source (1) and the shielding element (3) in the form of an optical free-beam, preferably without interposition of further optical elements, and/or the measuring beam (5) at least partly reflected on the medium being measured runs between the shielding element (3) and the detector (2) in the from of an optical free-beam, preferably without interposition of further optical elements.

7. Backscatter sensor according to any one of the preceding claims,
**characterised in that**
the light source (1) and the detector (2) are each spaced less than 5 cm, especially less than 1 cm, more preferably less than 0.5 cm, from the first convex surface of the shielding element.

8. Backscatter sensor according to any one of the preceding claims,
**characterised in that**
the shielding element (3) is formed in one piece from material transparent to the measuring beam (5), preferably in the form of a spherical lens or rod lens.

9. Backscatter sensor according to any one of the preceding claims,
**characterised in that**
the light source (1) and the detector (2) are arranged with parallel optical axes.

10. Backscatter sensor according to any one of the preceding claims,
**characterised in that**
the light source (1) and the detector (2) are arranged in such a way that the optical axes are in neither case perpendicular to the first convex surface.

11. Backscatter sensor according to any one of the preceding claims,
**characterised in that**
the backscatter sensor is configured for embedding in a cylindrical insertion element, and the light source (1) and the detector (2) are arranged with optical axes parallel to a cylinder axis of the insertion element.

12. Backscatter sensor according to any one of the preceding claims,
**characterised in that**
the backscatter sensor is configured with a focus point for the measuring beam (5) at a spacing of between 0 mm and 1 cm, preferably between 0.1 mm and 0.8 mm, from the second convex surface in the medium being measured.

13. Method of measuring the optical backscatter in liquid, pasty and/or pulverulent media,
comprising the following method steps:
a. generating a measuring beam by means of a light source (1) and conducting the measuring beam through a liquid-tight optical shielding element (3) into a medium being measured;
b. detecting a portion of the measuring beam backscattered from the medium through the shielding element (3) to a detector (2); wherein the shielding element (3) is used for shielding the light source (1) and the detector (2) with respect to the medium being measured and is in the form of a biconvex lens; wherein the measuring beam and the backscattered portion of the measuring beam are focussed by means of a first convex surface of the shielding element, which surface faces towards the light source (1) and the detector (2), and by means of a second convex surface of the shielding element, which surface faces towards the medium,
**characterised in that**
the detector (2) is arranged outside a measuring beam reflection plane which is defined by the beam path of the measuring beam inside the shielding element and by the beam path of the measuring beam partly reflected on the inner side of the second convex surface inside the shielding element.

## Revendications

1. Capteur à rétrodiffusion pour milieux liquides, pâteux et/ou pulvérulents, comprenant une source de lumière (1) pour émettre un faisceau de mesure,
un détecteur (2) pour détecter le faisceau de mesure au moins partiellement réfléchi sur le milieu à mesurer et
un élément optique de protection (3) étanche aux liquides pour protéger la source de lumière (1) et le détecteur par rapport au milieu à mesurer, dans lequel l'élément de protection (3) est réalisé sous la forme d'une lentille biconvexe, avec au moins une première surface convexe tournée vers la source de lumière (1) et le détecteur (2) et au moins une deuxième surface convexe tournée vers le milieu à mesurer dans la configuration de mesure,
dans lequel le capteur à rétrodiffusion est conçu pour un contact direct entre la deuxième surface convexe et le milieu à mesurer dans la configuration de mesure, **caractérisé en ce**
**que** le détecteur (2) est disposé à l'extérieur d'un plan de réflexion de faisceau de mesure qui est défini par le chemin optique du faisceau de mesure à l'intérieur de l'élément de protection et le chemin optique du faisceau de mesure partiellement réfléchi sur la face intérieure de la deuxième surface convexe à l'intérieur de l'élément de protection.

2. Capteur à rétrodiffusion selon l'une des revendications précédentes,
**caractérisé en ce**
**que** le détecteur (2) est disposé à l'extérieur d'un plan focal de faisceau de mesure qui est défini par l'axe optique de la source de lumière et le point focal sur lequel le faisceau de mesure est focalisé, en particulier focalisé par l'élément de protection dans le milieu.

3. Capteur à rétrodiffusion selon l'une des revendications précédentes,
**caractérisé en ce**
**que** le détecteur (2) est disposé à l'extérieur du chemin optique d'un faisceau de mesure partiellement réfléchi sur la face intérieure de la deuxième surface convexe à l'intérieur de l'élément de protection.

4. Capteur à rétrodiffusion selon l'une des revendications précédentes,
**caractérisé en ce**
**que** le capteur à rétrodiffusion présente une monture (4) pour l'élément de protection (3), laquelle est conçue de telle sorte et dans laquelle l'élément de protection (3) est disposé de telle sorte que, dans la configuration de mesure, la deuxième surface convexe dépasse au moins partiellement de la monture (4) dans le milieu à mesurer.

5. Capteur à rétrodiffusion selon la revendication 4,
**caractérisé en ce**
**que** la monture (4) présente une surface de contact, de préférence une surface de contact plane, pour le milieu à mesurer et l'élément de protection (3) est disposé dans la monture (4) sans retrait sur la surface de contact.

6. Capteur à rétrodiffusion selon l'une des revendications précédentes,
**caractérisé en ce**
**que** le faisceau de mesure (5) s'étend entre la source de lumière (1) et l'élément de protection (3) sous forme de faisceau optique libre, de préférence sans interposition d'autres éléments optiques et/ou le faisceau de mesure (5) au moins partiellement réfléchi sur le milieu à mesurer s'étend entre l'élément de protection (3) et le détecteur (2) sous forme de faisceau optique libre, de préférence sans interposition d'autres éléments optiques.

7. Capteur à rétrodiffusion selon l'une des revendications précédentes,
**caractérisé en ce**
**que** la source de lumière (1) et le détecteur (2) présentent chacun une distance inférieure à 5 cm, en particulier inférieure à 1 cm, de préférence inférieure à 0,5 cm, par rapport à la première surface convexe de l'élément de protection.

8. Capteur à rétrodiffusion selon l'une des revendications précédentes,
**caractérisé en ce**
**que** l'élément de protection (3) est formé d'une seule pièce en matériau transparent au faisceau de mesure (5), de préférence sous la forme d'une lentille sphérique ou d'une lentille barreau.

9. Capteur à rétrodiffusion selon l'une des revendications précédentes,
**caractérisé en ce**
**que** la source de lumière (1) et le détecteur (2) sont disposés avec des axes optiques parallèles.

10. Capteur à rétrodiffusion selon l'une des revendications précédentes,
**caractérisé en ce**
**que** la source de lumière (1) et le détecteur (2) sont disposés de telle sorte que les axes optiques ne sont chacun pas perpendiculaires à la première surface convexe.

11. Capteur à rétrodiffusion selon l'une des revendications précédentes,
**caractérisé en ce**
**que** le capteur à rétrodiffusion est conçu pour être intégré dans un élément d'insertion cylindrique et que la source de lumière (1) et le détecteur (2) sont disposés avec des axes optiques parallèles à un axe de cylindre de l'élément d'insertion.

12. Capteur à rétrodiffusion selon l'une des revendications précédentes,
**caractérisé en ce**
**que** le capteur à rétrodiffusion est conçu avec un point focal pour le faisceau de mesure (5) à une distance comprise entre 0 mm et 1 cm, de préférence entre 0,1 mm et 0,8 mm, par rapport à la deuxième surface convexe dans le milieu à mesurer.

13. Procédé pour mesurer la rétrodiffusion optique dans des milieux liquides, pâteux et/ou pulvérulents, comprenant les étapes suivantes :
a. génération d'un faisceau de mesure au moyen d'une source de lumière (1) et guidage du faisceau de mesure à travers un élément optique de protection étanche aux liquides (3) dans un milieu à mesurer ;
b. détection d'une partie du faisceau de mesure rétrodiffusé par le milieu à travers l'élément de protection (3) vers un détecteur (2) ; dans lequel l'élément de protection (3) est utilisé pour protéger la source de lumière (1) et le détecteur (2) par rapport au milieu à mesurer et est réalisé sous la forme d'une lentille biconvexe ; dans lequel le faisceau de mesure et la partie rétrodiffusée du faisceau de mesure sont focalisés au moyen d'une première surface convexe de l'élément de protection tournée vers la source de lumière (1) et le détecteur (2) et d'une deuxième surface convexe de l'élément de protection tournée vers le milieu,
caractérisé en ce en ce
que le détecteur (2) est disposé à l'extérieur d'un plan de réflexion de faisceau de mesure qui est défini par le chemin optique du faisceau de mesure à l'intérieur de l'élément de protection et le chemin optique du faisceau de mesure partiellement réfléchi sur la face intérieure de la deuxième surface convexe à l'intérieur de l'élément de protection.
